# EUROPÄISCHE PATENTANMELDUNG

(11) **EP 4 564 112 A1**
(43) Veröffentlichungstag der Anmeldung: **04.06.2025**
(21) Anmeldenummer: 24211182.1
(22) Anmeldetag: 06.11.2024
(51) Int. Cl.: G05B 23/02

(54) **VERFAHREN ZUR AUSWERTUNG VON DATEN EINER DRUCKMASCHINE**

(30) Priorität: 15.11.2023 DE 102023131836; 24.05.2024 DE 102024114701
(71) Anmelder: manroland Goss web systems GmbH, 86153 Augsburg (DE)
(72) Erfinder: Sailer, Alexander, 86441 Zusmarshausen (DE)

(57) **Zusammenfassung**

Die Erfindung betrifft ein computerimplementiertes Verfahren zur Analyse von Daten einer Druckmaschine während oder nach einer Produktion, wobei von der Druckmaschine während mindestens eines Druckauftrages eine Anzahl von Druckprodukten mit einem vorgegebenen Drucktechnik-Sollwert (8) produziert werden, wobei von einer Recheneinrichtung (20) über einen Teil des eines Druckauftrages hinweg Maschinen-Istdaten (1) und/oder Drucktechnik-Istwerte (2) und/oder Produktionsdaten (3) und/oder Maschinen-Störsignale (4) und/oder Steuerungssignale (5) und/oder ein Bediensignal (6) erfasst und/oder über einen Zeitraum hinweg gespeichert werden.

Es ist Aufgabe der Erfindung, die großen Datenmengen und die sehr hohe Anzahl von Messwerten und Signalen mittels einem computerimplementierten Verfahren auszuwerten, um Ursachen für Produktionsstörungen ausfindig zu machen und die Produktivität einer Druckmaschine steigern zu können.

Die Aufgabe wird dadurch gelöst, dass die einen oder mehreren Maschinen-Istdaten (1) während der Produktion von Druckprodukten des Druckauftrages als ein oder mehrere Produktions-Istdaten (10) hinterlegt und/oder gespeichert werden und in Abhängigkeit der Produktionsdaten (3) und/oder für vergleichbare Produktionsdaten (3) durch Einsatz künstlicher Intelligenz aus den Produktions-Istdaten (10) für eine Zeitspanne einer zumindest störungsfreien Produktion ein oder mehrere Maschinen-Normwerte (11) gebildet werden.

## Beschreibung

Die Erfindung betrifft ein computerimplementiertes Verfahren zur Erfassung und Analyse von Daten einer Druckmaschine während oder nach einer Produktion zur Auswertung und zur Produktivitätsoptimierung, wobei von der Druckmaschine während mindestens eines Druckauftrages eine definierte Anzahl von Druckprodukten mit mindestens einem vorgegebenen Drucktechnik-Sollwert produziert werden, wobei von einer Recheneinrichtung über mindestens einen Teil des mindestens einen Druckauftrages hinweg ein oder mehrere Maschinen-Istdaten und/oder ein oder mehrere Drucktechnik-Istwerte und/oder ein oder mehrere Produktionsdaten und/ oder ein oder mehrere Maschinen-Störsignale und/oder mindestens ein Steuerungssignal und/oder mindestens ein Bediensignal erfasst und/oder über einen Zeitraum hinweg gespeichert werden.

Moderne Druckmaschinen wie beispielsweise Rollendruckmaschinen sind hochkomplexe Anlagen, bei welchen Substrate mit sehr hohen Anforderungen bezüglich Störgrößen, wie beispielsweise Papier mit einer sehr hohen Anfälligkeit für Bahnrisse bei Bahnspannungsschwankungen oder Überfeuchtung, mit sehr hohen Substratgeschwindigkeiten von bis zu 17 Meter pro Sekunde und sehr hohen Substratbreiten von bis zu 2.860 Millimeter mit einer hohen Variabilität an Produktionsmöglichkeiten, Substraten, Substratbreiten und Verbrauchsmaterialien mit sehr hohen Qualitätsanforderungen, wie beispielsweise zulässige Farbregisterabweichungen von wenigen Mikrometern, bedruckt werden können.

So kommen beispielsweise bei einer gewöhnlichen Illustrations-Rollendruckmaschine mit vier Druckeinheiten für das beidseitige vierfarbige Bedrucken einer Papierbahn und einem Falzwerk etwa 50 elektrische Antriebe, ungefähr 20 Rechner, hunderte Sensoren und sonstige Einrichtungen zur Erfassung oder zur Ermittlung von Daten zum Einsatz. So kann beispielsweise ein moderner Antriebsmotor bezüglich einundzwanzig Parametern überwacht werden. So können bei einer relativ vollständigen Überwachung einer Rollendruckmaschine in nur einer Sekunde über 20.000 Datensätze anfallen, was üblicherweise einem erfassbaren Datenvolumen von über 20 Gigabyte (GB) pro Tag entspricht.

So sind derartige Druckmaschinen aufgrund der Voreinstellungen und aufgrund des hohen Automatisierungsgrades hocheffizient und können auch hinsichtlich der Produktivität in hohem Maße ausgewertet und somit bewertet werden. Gleichzeitig ist es jedoch aufgrund der hohen Datenmengen und der hohen Zahl an erfassten Daten immer schwieriger geworden, die Ursachen von Maschinenstörungen oder Störungen der Produktion zu erkennen oder ausfindig zu machen, zumal mit einer zunehmenden Zahl von Antrieben, Sensoren, Rechnern etc. auch die Zahl potentieller Fehler und somit die Zahl potentieller Fehlermeldungen steigen kann und gleichzeitig die Einstellmöglichkeiten aber auch die Verstellmöglichkeiten von Parametern etc. für das Bedienpersonal gestiegen sind. Durch die hohe Anzahl der in einer Druckmaschine integrierten Komponenten und deren jeweilige Optimierung erfolgt auch innerhalb einer derartigen Komponente eine Regelung, welche zwar grundsätzlich keinen Einfluss auf die Gesamtfunktionalität der Druckmaschine haben sollte und im Normalfall auch nicht hat, aber in Einzelfällen, das heißt unter speziellen Produktionsbedingungen und/oder im Zusammenwirken mit anderen derartigen Steuerungs- oder Regelungsabläufen anderer Komponenten durchaus Einfluss auf das Verhalten der Gesamtmaschine haben kann.

Es ist somit die Aufgabe der vorliegenden Erfindung, die großen Datenmengen und die sehr hohe Anzahl von Messwerten und Signalen pro Zeiteinheit mittels einem computerimplementierten Verfahren auszuwerten, um Ursachen für Maschinenstörungen beziehungsweise Produktionsstörungen ausfindig zu machen und die Produktivität einer Druckmaschine steigern zu können.

Die Aufgabe wird dadurch gelöst, dass die einen oder mehreren Maschinen-Istdaten während der Produktion von Druckprodukten des mindestens einen Druckauftrages als ein oder mehrere Produktions-Istdaten hinterlegt und/oder gespeichert werden und in Abhängigkeit der Produktionsdaten und/oder für vergleichbare Produktionsdaten durch Einsatz künstlicher Intelligenz aus den Produktions-Istdaten für mindestens eine Zeitspanne einer definierten Mindestdauer einer zumindest störungsfreien Produktion ein oder mehrere Maschinen-Normwerte gebildet werden.

Die Bildung derartiger Maschinen-Normwerte hat den Vorteil, dass für jede der relevanten Maschinen-Istdaten die entsprechenden Maschinen-Normwerte vorhanden sind, bei welchen über einen definierbaren Zeitraum hinweg eine störungsfreie Produktion möglich ist, so dass die Maschinen-Normwerte als ein Maßstab oder als eine Bezugsgröße im Falle von Produktionsstörungen verwendet werden können. Gleichzeitig dienen die so ermittelten Maschinen-Normwerte aber auch nicht nur bei der Analyse von Störungsursachen, sondern können auch als Basis für einen Vergleich der Maschineneinstellungen und der Maschinenparameter von grundsätzlich vergleichbaren Druckmaschinen bei der Produktion von vergleichbaren Substraten herangezogen werden.

Gemäß einer Ausgestaltung der Erfindung werden eine oder mehrere Maschinen-Istdaten als ein oder mehrere Anomalie-Istdaten hinterlegt und/oder gespeichert, zu welchen Abweichungen zu den einen oder mehreren Maschinen-Normwerten gebildet werden.

Diese Ausgestaltung weist den Vorteil auf, dass durch den Vergleich der Maschinen-Istdaten mit den Maschinen-Normwerten für alle wesentlichen oder relevanten Parameter Anomalien der Maschinen-Istdaten ermittelt werden können, was die Eingrenzung von möglichen Fehlerursachen wesentlich erleichtert, wenn beispielsweise in einer bestimmten Produktionssituation die Leistungsaufnahme der Antriebe und/oder die Bahnspannung insgesamt oder an einer spezifischen Stelle gegenüber dem entsprechenden Normwert signifikant nach oben oder nach unten abweicht. Durch die Anzeige oder Ausgabe dieser Anomalien im Vergleich zu den Normwerten kann die Suche nach möglichen Fehlerursachen für Produktionsstörungen erheblich vereinfacht werden, was bei einer manuellen Auswertung der Daten aufgrund der Datenmengen und der teilweisen Kurzzeitigkeit derartiger Anomalien nicht mehr möglich ist.

Gemäß einer weiteren Ausgestaltung der Erfindung werden diejenigen Maschinen-Istdaten als Anomalie-Istdaten hinterlegt und/oder gespeichert, zu welchen eine Anomalie gegenüber den vorhergehenden und/oder nachfolgenden Maschinen-Istdaten aufgewiesen wird.

Diese Ausgestaltung weist den Vorteil auf, dass damit auch Anomalien von Maschinen-Istdaten erkannt werden, welche entweder deutlich die Maschinen-Normwerte überschreiten oder unterschreiten, oder aber innerhalb der Maschinen-Normwerte liegen, aber eben gegenüber den vorhergehenden und nachfolgenden Werten ein anormales Verhalten aufweisen. Da eine derartige Anomalie ein Grund oder eine Folge einer Maschinenstörung und/oder einer Produktionsstörung sein kann, ermöglicht diese Vorgehensweise eine schnelle Ermittlung etwaiger Störungen.

Gemäß einer weiteren Ausgestaltung der Erfindung werden diejenigen Maschinen-Istdaten als Anomalie-Istdaten hinterlegt und/oder gespeichert, bei welchen mindestens ein vorgegebener Maschinen-Sollwert überschritten wird.

Das Überschreiten eines vorgegebenen Maschinen-Sollwertes, das heißt das Überschreiten eines vorgegebenen Maximalwertes einer Komponente wie beispielsweise die maximal zulässige Stromaufnahme eines Antriebes oder das Überschreiten einer in einem Maschinenabschnitt definierten Bahnspannung oder das Überschreiten einer vorgegebenen Maximal-Temperatur einer Komponente sind nach allgemeiner Erfahrung Anzeichen für eine Unregelmäßigkeit, welche die o.a. Maximalwerte hervorruft und/oder beim Ausregeln dieser Unregelmäßigkeit auftreten. So muss das Überschreiten von vorgegebenen Maschinen-Sollwerten nicht zwingend eine Produktionsstörung hervorrufen, jedoch treten derartige Unregelmäßigkeiten als Folge eines ungeplanten Produktionszustandes auf, welcher bei ausreichendem Umfang zu einer Produktionsstörung führen kann, weshalb das Erkennen derartiger Überschreitungen von Maschinen-Sollwerten zum Ausfindigmachen von kritischen Maschinenzuständen hilfreich sein kann.

Gemäß einer weiteren Ausgestaltung der Erfindung werden diejenigen Maschinen-Istdaten als ein oder mehrere Anomalie-Istdaten hinterlegt und/oder gespeichert werden, bei welchen mindestens ein vorgegebener Drucktechnik-Grenzwert überschritten wird.

Da das Überschreiten mindestens eines Drucktechnik-Grenzwertes wie beispielsweise das Farbregister oder die Farbdichte einer Druckfarbe eine Folge einer aufgetretenen Störung wie beispielsweise einer Bahnspannungsschwankung sein kann, ist es sinnvoll, das Überschreiten eines Drucktechnik-Grenzwertes als Indikator für eine zeitlich zuvor oder gleichzeitig aufgetretene Unregelmäßigkeit zu verwenden, um so die Suche nach entsprechenden Ursachen für Störungen des Produktionsablaufes sicherzustellen.

Gemäß einer weiteren Ausgestaltung der Erfindung werden von der Recheneinrichtung zusätzlich eines oder mehrere Maschinen-Störsignale erfasst und/oder gespeichert.

Maschinen-Störsignale sind von der Druckmaschine erzeugte Signale, die im Normalbetrieb ungeplant auftreten können oder aber im Falle einer Störung erzeugt werden, wie beispielsweise eine Meldung eines Stoppers im Falzwerk oder die Meldung eines Bahnbruches. Ein Maschinen-Störsignal kann jedoch auch eine Sicherheitsmeldung umfassen, die beim Betreten eines mittels einem Lichtgitter abgesicherten Bereiches oder beim Öffnen eines abgesicherten Schutzgitters auftritt. Da derartige Signale in der Regel ein klares Indiz für eine vorliegende Störung sind, ist das Erfassen und Auswerten der Maschinen-Störsignale sehr vorteilhaft für das Erkennen von Unregelmäßigkeiten, Produktionsstörungen, Störungen des Steuerungsablaufes oder aber für das Erkennen von Bedienfehlern.

Gemäß einer weiteren Ausgestaltung der Erfindung werden die einen oder mehreren Maschinen-Istdaten als eine oder mehrere Anomalie-Istdaten hinterlegt und/ oder gespeichert, bei welchen im zeitlichen Vorlauf und/oder im zeitlichen Nachgang mindestens ein Maschinen-Störsignal erzeugt wird.

Da Maschinen-Störsignale in der Regel ein klares Indiz für eine vorliegende Störung oder aber für eine unzulässige Bedienung sind, ist das Erfassen und Auswerten der Maschinen-Störsignale sehr vorteilhaft für das Erkennen von Unregelmäßigkeiten, Produktionsstörungen, Störungen des Steuerungsablaufes oder aber für das Erkennen von Bedienfehlern, welche die Folge eines Maschinen-Störsignales sind, weshalb es zur Ursachenfindung einer Maschinenstörung sehr hilfreich ist, derartige Maschinenstörsignale ausfindig zu machen.

Durch den Einsatz einer sehr hohen Anzahl von automatisierten und überwachten Komponenten an modernen Druckmaschinen steigt jedoch auch das Risiko, dass derartige Maschinen-Störsignale unbeabsichtigt generiert werden und dass durch dadurch ausgelöste Steuerungsprozesse Maschinenbedingungen entstehen können, wie beispielsweise das Einleiten eines Sicher-Halt-Stopps mit tendenziell erhöhtem Bahnbruchrisiko, so dass das Ausfindigmachen derartiger Maschinen-Störsignale die Ursachenfindung von ungewollten Störungen des Produktionsablaufes sehr erleichtert.

Gemäß einer weiteren Ausgestaltung der Erfindung wird ein Fehlerzeitraum ermittelt und/oder gespeichert, bei welchem ein oder mehrere Anomalie-Istdaten im Bereich der zugehörigen ein oder mehreren Maschinen-Normwerte liegen.

Zeigen ein oder mehrere Maschinen-Istdaten eine Anomalie, welche jedoch innerhalb der üblichen Maschinen-Normwerte liegt oder liegen, so werden derartige Abweichungen bei einer normalen Auswertung der Maschinen-Istdaten im Rahmen einer Fehlersuche und/oder einer Produktivitätsoptimierung häufig nicht erkannt, da keine erkennbare Abweichung zu den allgemein üblichen Maschinen-Normwerten vorliegt.

Im Rahmen der vorliegenden Erfindung wurde jedoch festgestellt, dass das Auftreten von Anomalien von mehreren Maschinen-Istdaten wie beispielsweise auch vermeintlich geringe Anomalien der Leistungsaufnahme von Antrieben, welche nacheinander auf die Bahnspannung der Substratbahn einwirken, durch ein Interagieren auch in vermeintlich geringem Ausmaß zu Produktionsstörungen oder Qualitätseinbußen führen können, wenn sich beispielsweise durch Regelungsvorgänge der jeweiligen Antriebe die Auswirkungen auf die Bahnspannung aufsummieren, weshalb das Erkennen und Erfassen von Anomalien von Maschinen-Istdaten auch im Bereich der Maschinen-Normwerte essentiell für die Fehleranalyse und die anschließende Maschinenoptimierung ist. Als Fehlerzeitraum wird hierbei eine Zeitspanne vor und/oder nach einer Maschinenstörung oder einer Störung der Produktion betrachtet.

Gemäß einer weiteren Ausgestaltung der Erfindung werden ein oder mehrere Anomalie-Istdaten und/oder der mindestens eine Fehlerzeitraum auf das Auftreten von mindestens einem Bediensignal und/oder mindestens eine Anomalie und/oder mindestens ein Steuerungssignal analysiert.

Diese Ausgestaltung hat den Vorteil, dass zur Fehleranalyse und zur Steigerung der Produktivität in den Zeiträumen, in denen entsprechende Störungen auftreten oder potentiell möglich sind, nach durch das Bedienpersonal ausgelöste Bediensignale zum Aktivieren diverser Funktionen wie beispielsweise das Auslösen eines Fortdruckwaschvorganges und/oder nach Steuerungssignalen, welche von der Maschinensteuerung oder von den Komponentensteuerungen zur Ausführung von diversen Arbeitsschritten wie beispielsweise das Auslösen eines Rollenwechselvorgangs oder das Hochfahren der Abluftgebläse von Heißlufttrocknern nach Auslösen eines Gummituchwaschvorganges ausgelöst werden, mittels einem computerimplementierten Verfahren gesucht wird, so dass trotz der sehr hohen Datenmengen eine zeitliche Abfolge der Bediensignale und/oder der Steuerungssignale samt deren Einfluss auf Maschinen-Istdaten analysiert und zur Fehlerbeseitigung verwendet werden kann.

Gemäß einer weiteren Ausgestaltung der Erfindung wird mindestens ein Datensatz aus einem oder mehreren Maschinen-Istdaten und/oder mindestens einem Bediensignal und/oder mindestens einem Steuerungssignal als potentielle Ursache für ein oder mehrere Anomalie-Istdaten und/oder für mindestens einen Fehlerzeitraum und/oder für mindestens ein Maschinen-Störsignal ermittelt und/oder ausgegeben und/oder visualisiert.

Ein derartiger Datensatz weist den Vorteil und die Möglichkeit auf, derartige Situationen mit aufgetretenen Störungen oder mit potentiell auftretenden Störungen oder mit Beeinflussung der Druckqualität mit den relevanten Maschinen-Istdaten, den aufgetretenen Anomalien sowie den verwendeten Bediensignalen, Steuerungssignalen etc. automatisiert zu dokumentieren und zu visualisieren, um diese dann durch eine zusätzliche Software weiter bewerten zu lassen oder durch einen Experten bewerten zu lassen, um so Rückschlüsse zur Vermeidung derartiger Maschinenabläufe ziehen zu können.

Gemäß einer weiteren Ausgestaltung der Erfindung wird eine Plausibilitätsprüfung des mindestens einen Datensatzes durchgeführt. Bei dieser Plausibilitätsprüfung wird überprüft, ob die Maschinen-Istdaten mit entsprechenden Anomalien und/oder die in dem erfassten Fehlerzeitraum dokumentierten Bediensignale und/oder Steuerungssignale grundsätzlich zueinander kompatibel sind. So ist es beispielsweise eher nicht plausibel, dass aufgrund von Bahnspannungsschwankungen und/oder Anomalien in den Antriebsmomenten der Motoren im Rollenwechsler in einem zeitlich engen Zusammenhang mit einem Stopper in einem Falzwerk haben. Ferner ist es eher nicht plausibel, dass Anomalien der Gebersignale eines Antriebs in einem Falzwerk Registerabweichungen in einem spezifischen Druckwerk verursachen. So kann durch das computerimplementierte Verfahren durch derartige hinterlegte logische Verknüpfungen die Plausibilität der erfassten und zueinander in Zusammenhang gebrachten Daten geprüft werden, um die Qualität der Fehleranalyse zu verbessern.

Gemäß einer weiteren Ausgestaltung der Erfindung wird die Plausibilitätsprüfung zur Optimierung der eingesetzten künstlichen Intelligenz verwendet. Hierzu kann die hinterlegte Datenbank mit einer zunehmenden Anzahl an durchgeführten Plausibilitätsprüfungen entsprechend optimiert werden, beispielsweise auch durch eine Eingabe eines Bedieners, so dass durch die Optimierung der eingesetzten künstlichen Intelligenz die Zuverlässigkeit der Plausibilitätsprüfung gesteigert werden kann.

Gemäß einer weiteren Ausgestaltung der Erfindung wird der mindestens eine Maschinen-Normwert mit Bezug auf die Produktionsdaten für unterschiedliche Produktionsphasen und Produktionszustände eingeteilt und in einer Speichervorrichtung gespeichert und/oder von dieser ausgegeben.

Hierdurch ist es möglich, mindestens einen Maschinen-Normwert, das heißt einen Wert oder zumeist einen Wertebereich für einen Maschinen-Istwert, wie beispielsweise eine Bahnspannung in einem spezifischen Maschinenabschnitt, die eingestellten Voreilungen von Zugwalzen, das Temperaturprofil in einem Druckwerk oder im Kühlwerk etc., mit welchen grundsätzlich eine störungsfreie Produktion von Druckprodukten möglich ist, für verschiedene Produktionszustände wie das Anfahren, der Einrichtbetrieb, der Fortdruckbetrieb oder das Fortdruckwaschen, festgelegt und gespeichert und/oder ausgegeben.

Hiermit ist es möglich, dass bereits während der Produktion ein Abgleich der eingestellten und/oder der vorhandenen Maschinen-Istdaten mit den Maschinen-Normwerten erfolgt, so dass Produktionsstörungen aufgrund von Fehleinstellungen der Druckmaschine beispielsweise durch das Bedienpersonal vermieden werden können und die Produktionsstabilität erhöht wird.

Zudem ist es mit diesem Verfahren möglich, nicht nur die entsprechende Druckmaschine mit noch höherer Produktionszuverlässigkeit zu betreiben, sondern die so gewonnenen Daten können auch auf andere baugleiche oder ähnliche Druckmaschinen mit Optimierungspotential der Produktionsstabilität verwendet werden.

Gemäß einer weiteren Ausgestaltung der Erfindung werden die Maschinen-Normwerte mit Bezug auf die Produktionsdaten als ein oder mehrere Voreinstellwerte für Druckaufträge mit gleichen oder vergleichbaren Produktionsdaten verwendet. Durch diese Lösung ist es möglich, nur die Maschinen-Normwerte, mit denen definitiv eine stabile Produktion von Druckprodukten möglich ist, für die Voreinstellung der Druckmaschine zu verwenden, so dass durch diese automatisierte Vorgehensweise Bedienfehler vermieden werden und gleichzeitig aufgrund der dauerhaften Optimierung der Maschinen-Normwerte Voreinstellwerte für eine maximale Produktionsstabilität beim Laden eines neuen Druckauftrages mit gleichen oder vergleichbaren Produktionsdaten sicherzustellen.

Gemäß einer weiteren Ausgestaltung der Erfindung wird im Falle des Auftretens von einem oder mehreren Anomalie-Istdaten durch die Recheneinrichtung eine Warnmeldung erzeugt und/oder ein Eingriff in die Steuerung der Druckmaschine erfolgt, wenn ein oder mehrere Anomalie-Istdaten mindestens einen Anomalie-Grenzwert überschreiten.

Durch diese Ausgestaltung kann das computerimplementierte Verfahren nicht nur zur Datensicherung und Datenanalyse nach aufgetretenen Störungen oder drucktechnischen Problemen und zur zukünftigen Vermeidung dieser herangezogen werden. Vielmehr ist es durch diese Ausgestaltung auch möglich, bereits bei sich anbahnenden Problemen der Produktionsstabilität oder der Druckqualität eine Warnmeldung zu erzeugen und/oder in die Maschinensteuerung aktiv einzugreifen, beispielsweise durch Reduzierung der Druckgeschwindigkeit, um so Produktionsstörungen beispielsweise durch Bahnbrüche oder das Drucken von Makulatur zu vermeiden und/oder das Bedienpersonal auf mögliche Unregelmäßigkeiten im Produktionsprozess aufmerksam zu machen, noch bevor Störungen auftreten und um diese zu vermeiden.

Bevorzugte Weiterbildungen der Erfindung ergeben sich aus den Unteransprüchen und der nachfolgenden Beschreibung. Verschiedene Ausführungsbeispiele der Erfindung werden, ohne hierauf beschränkt zu sein, an Hand der Zeichnungen näher erläutert. Dabei zeigt:
- Fig. 1: eine schematische Funktionsweise des Verfahrens
- Fig. 2: ein Maschinen-Istdatum mit einem anormalen Verlauf
- Fig. 3: einen beispielhaften Zusammenhang zwischen Anomalie-Istdaten und einem Drucktechnik-Istwert
- Fig. 4: einen beispielhaften Verlauf von Anomalie-Istdaten mit einem Maschinen-Störsignal
- Fig. 5: einen beispielhaften Verlauf von Anomalie-Istdaten mit einem Maschinen-Störsignal und einem Fehlerzeitraum
- Fig. 6: einen beispielhaften Verlauf von Anomalie-Istdaten mit einem Maschinen-Störsignal und einem Fehlerzeitraum in Zusammenhang mit einem Steuerungssignal
- Fig. 7: den Zusammenhang eines beispielhaften Maschinen-Normwertes mit Produktionsphasen
- Fig. 8: ein Anomalie-Istdatum bei Überschreiten eines Anomalie-Grenzwertes

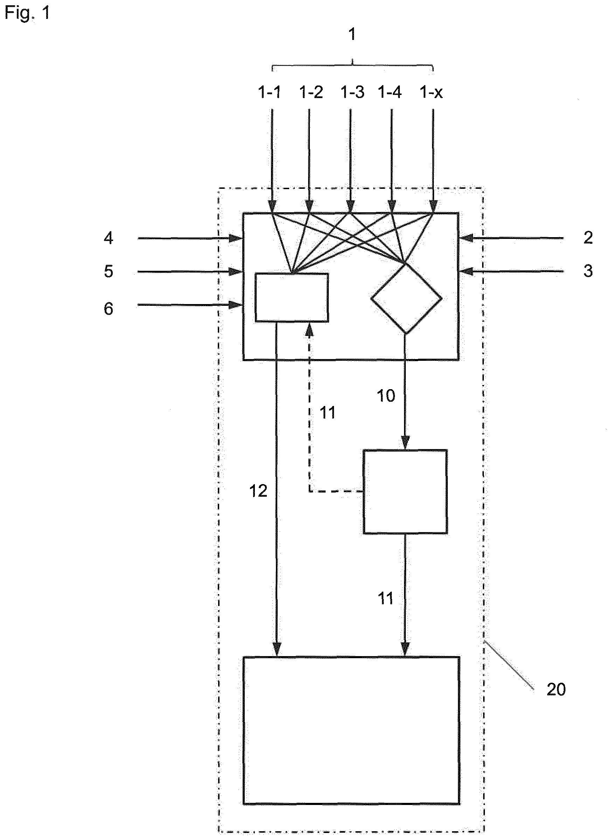

Fig. 1 zeigt eine schematische Darstellung des Verfahrens zur Auswertung der Daten einer Druckmaschine. Zum besseren Verständnis ist jedoch zunächst eine Definition der verwendeten Begriffe zwingend erforderlich.

In der vorliegenden Erfindung ist der Begriff "Daten" sowohl als auch ein fester Wert zu verstehen, der entweder über eine entsprechende Zeitdauer hinweg konstant ist wie beispielsweise Solldaten, wie beispielsweise eine für eine Druckfarbe vorgegebene Farbdichte als Drucktechnik-Sollwert 8. Daten können aber auch die zeitliche Abfolge beziehungsweise die Aneinanderreihung von Messwerten oder erfassten Werten oder von ermittelten Werten über einen gewissen Zeitraum hinweg sein, wie beispielsweise die Stromaufnahme eines Antriebsmotors oder die Voreilung einer Zugwalze oder der von einem Temperatursensor ermittelten Temperatur eines Bauteils oder eines Fluids oder die Registerabweichung einer Druckfarbe zu einer anderen Druckfarbe als Drucktechnik-Istwert 2.

Als Maschinen-Istdaten 1 werden die durch diverse Sensoren permanent oder getaktet erfasste und/oder permanent oder getaktet ermittelte physikalische Daten, welche in der Druckmaschine von deren Bauteilen oder Komponenten erfasst oder ermittelt werden, bezeichnet. Beispiele sind physikalische Daten wie die unterschiedlichen Antriebsparameter (Stromstärke, Spannung, Phasenversatz, Drehzahl etc.) eines Antriebsmotors, Bahnspannungswerte an verschiedenen Messstellen, die tatsächlich ermittelte Bahnbreite, welche sich aufgrund der Bahnspannung oder beispielsweise dem Fan-Out-Effekt ändern kann, die Farbzonenöffnung, die Drehzahl eines Farbduktors oder Feuchtmittelduktors, die Bildregler-Stellung, Voreilungen diverser Antriebe und/oder diverser Komponenten, die Produktionsgeschwindigkeit sowie die zeitlichen Verläufe dieser erfassten oder ermittelten Daten.

Als Maschinen-Sollwerte 9 werden gewisse Kenngrößen bezeichnet, welche von den unterschiedlichen Komponenten nicht unterschritten und/oder aber nicht überschritten werden dürfen, da ansonsten die Gefahr einer Störung oder eines Schadens besteht. Beispiele für Maschinen-Sollwerte 9 sind maximale Stromstärken eines Antriebsmotors, das maximale Drehmoment eines Antriebsmotors, eine in einer Komponente maximal zulässige Bahnspannung, eine Maximaltemperatur einer Komponente, eine Minimaltemperatur einer Komponente oder eines Fluids oder ähnliches.

Als Drucktechnik-Istwerte 2 werden die erfassten drucktechnischen Istwerte bezeichnet, das heißt, das sind die erfassten oder ermittelten Daten, welche eine Bewertung des Druckbildes der Druckprodukte zulassen. Beispiele für einen Drucktechnik-Istwert 2 sind die ermittelte Farbdichte, die Tonwertzunahme, die Farbregisterabweichung, ein ermittelter Tonererkennungswert, gewisse Dublierwerte oder - faktoren, Werte zur Ermittlung eines Fan-Out-Effekts, Diagonalregisterabweichungen etc.

Drucktechnik-Sollwerte 8 sind die Vorgaben für die Druckqualität eines zu druckenden Druckproduktes wie beispielsweise die Sollfarbdichten für die verwendeten Grundfarben, zulässige Registerabweichungen, ein zulässiger Fan-Out-Effekt oder eine zulässige Tonwertzunahme für ein spezifisches Raster. Bei Überschreiten oder Unterschreiten mindestens eines Drucktechnik-Sollwertes 8 eines Druckproduktes ist dieses somit nicht mehr als Gutprodukt zu bezeichnen und ist somit Makulatur.

Drucktechnik-Grenzwerte 13 sind Vorgaben für die Druckqualität wie beispielsweise eine Farbdichte für eine Grundfarbe, noch zu akzeptierende Farbregisterabweichungen, noch zu akzeptierende Tonwertzunahmen etc. Drucktechnik-Grenzwerte 13 sind somit die Werte, bei denen zwar noch ein Gutprodukt vorliegt, aber schon gewisse, wenngleich akzeptable Qualitätsabstriche vorhanden sind, welche jedoch als ein Indikator für die Produktion von Makulatur bei weiterer Verschlechterung zu werten sind.

Produktionsdaten 3 sind feste, in der Regel für eine Produktion, das heißt für einen Druckauftrag, unveränderliche Daten, welche vorgegeben werden und die eine Produktion im Sinne eines Druckauftrages definieren. Beispiele für Produktionsdaten 3 sind die Substratart, die Papierart oder Papierqualität, die Grammatur, die zu verwendende Bahnbreite, die erforderliche Falzart, die zu verwendende Druckfarbe, zu verwendende Zusätze wie beispielsweise der zu verwendende Feuchtmittelzusatz oder ähnliches.

Die Maschinen-Störsignale 4 werden von der Druckmaschine oder von den in der Druckmaschine verbaute Komponenten erzeugt und weisen auf eine Störung hin. Beispiele für Maschinen-Störsignale 4 sind beispielsweise eine Stoppermeldung in dem Falzwerk, eine Meldung über einen Bahnbruch ausgelöst von einem Bahnbruchsensor, eine Meldung der Makulaturweiche und somit das Produzieren von Makulatur, das heißt von Druckprodukten mit zumindest einem nicht erreichten Drucktechnik-Sollwert 8, ein Überlast-Signal eines elektrischen Antriebes oder Sicherheitsmeldungen wie das Signal einer Bereichsabsicherung für ein unbefugtes Durchdringen oder das Öffnen eines mittels einem Sicherheitsschalter überwachten Schutzgitters.

Bediensignale 6 sind in der Regel vom Bediener ausgelöste Befehle oder Signale wie beispielsweise der Maschinenstart, der Maschinenstopp, ein Schneller-Signal für das Erhöhen der Produktionsgeschwindigkeit, ein Langsamer-Signal für das Verringern der Produktionsgeschwindigkeit, das Betätigen eines Sicher-Halt-Tasters oder ähnliches.

Steuerungssignale 5 sind Maschinensignale, die entweder von der Maschinensteuerung der Druckmaschine oder aber von Steuerungen der Komponenten wie beispielsweise eines Rollenwechslers, eines Heißlufttrockners oder einer Gummituch-waschanlage generiert werden, um interne Abläufe zu steuern. Beispiele für Steuerungssignale 5 sind ein Signal eines Rollenwechslers zum Durchführen eines Rollenwechsels, ein Signal zum Einleiten des Eindruckwechsels nach Erreichen einer Sollauflage, Steuerungsbefehle der Schnittregister- oder der Farbregister-Regeleinrichtung etc.

Produktions-Istdaten 10 sind die Maschinen-Istdaten 1, bei welchen mindestens über einen zu definierenden Zeitraum hinweg eine störungsfreie Produktion betrieben werden kann. In der Regel werden hierbei auch Gutprodukte produziert, dies ist jedoch keine zwingende Voraussetzung, sofern die Produktion störungsfrei, das heißt ohne Bahnbrüche, Stopper etc. möglich ist, da beispielsweise für die Bewertung einer optimalen Bahnspannung die Drucktechnik-Istwerte 2 beispielsweise aufgrund von erforderlichen Farbzoneneinstellungen irrelevant sind.

Als Maschinen-Normwerte 11 werden die Maschinen-Istwerte oder Bereiche von Maschinen-Istwerten bezeichnen, bei denen eine störungsfreie Produktion möglich ist. Maschinen-Normwerte 11 können Absolutwerte sein, decken aber sehr häufig eine gewisse Bahnbreite im Sinne eines zulässigen Bereiches ab. Die Maschinen-Normwerte 11 können jedoch von den Produktionsdaten 3 wie beispielsweise der Art des Bedruckstoffes, der Grammatur, der Breite des zu verdruckenden Substrates etc. abhängig sein. Beispiele für Maschinen-Normwerte 11 sind beispielsweise der Bereich einer Bahnspannung an einer spezifisch angeordneten Messwalze, übliche Stromaufnahmen, Leistungsaufnahmen oder Drehmomente von Antriebsmotoren, gewisse Voreilungen diverser angetriebener Elemente, bei welchen eine störungsfreie Produktion über einen gewissen Zeitraum hinweg stabil möglich ist.

Als Anomalie-Istdaten 12 werden hierbei diejenigen Maschinen-Istdaten 1 oder aber auch Drucktechnik-Istwerte 2 bezeichnet, welche entweder Abweichungen oder Anomalien 7 zu den vorherigen und/oder den nachfolgenden Maschinen-Istdaten 1 aufweisen, wie beispielsweise ein sehr schwankender, unregelmäßiger Verlauf. Als Anomalie-Istdaten 12 werden jedoch auch diejenigen Maschinen-Istdaten 1 bezeichnet, welche die Maschinen-Sollwerte 9 überschreiten, oder bei denen Drucktechnik-Sollwerte 8 oder Drucktechnik-Grenzwerte 13 überschritten werden, oder bei denen im Betrieb Maschinen-Störsignale 4 auftreten. Zusammengefasst sind Anomalie-Istdaten 12 diejenigen Maschinen-Istdaten 1, welche Anomalien 7 von Maschinen-Istwerten 1 aber auch von der Druckproduktion zeigen und/oder hervorrufen und somit Auffälligkeiten zeigen und/oder hervorrufen und/oder bei denen Störungen auftreten und somit keine störungsfreie Produktion möglich ist.

Eine störungsfreie Produktion ist somit eine Produktion ohne Maschinen- oder Substrat-bedingte Störungen wie Stopper, Bahnrisse, auftretende Überlasten, nicht hinnehmbare Bahnverläufe, Faltenbildung etc.

Eine Produktionsphase oder ein Produktionszustand ist eine spezielle Phase während einer Produktion wie beispielsweise die Einrichtephase, der Fortdruck, das Fortdruckwaschen oder das Produktionsende.

Fig. 1 zeigt somit rein schematisch die Recheneinrichtung 20, welche über mindestens einen Teil des mindestens einen Druckauftrages hinweg ein oder mehrere Maschinen-Istdaten 1 und/oder ein oder mehrere Drucktechnik-Istwerte 2 und/oder ein oder mehrere Produktionsdaten 3 und/oder ein oder mehrere Maschinen-Störsignale 4 und/oder mindestens ein Steuerungssignal 5 und/oder mindestens ein Bediensignal 6 erfasst und/oder über einen Zeitraum hinweg speichert. Bei dem in Fig. 1 dargestellten Beispiel erfasst die Recheneinrichtung 20 eine Mehrzahl von Maschinen-Istdaten 1-1 bis 1-x, beispielsweise diverse Antriebsparameter der unterschiedlichen Antriebe der Druckmaschine, die Bahnspannung an verschiedenen Messeinrichtungen innerhalb der Druckmaschine, die tatsächliche Produktionsgeschwindigkeit, die Bahnbreiten vor und nach den Druckeinheiten und gegebenenfalls viele andere erfassbare oder ermittelbare Parameter.

Die Recheneinrichtung 20 kann entweder ein Bestandteil der Steuerungseinrichtung einer Druckmaschine sein, die Recheneinrichtung 20 kann jedoch auch außerhalb der in Fig. 1 nicht dargestellten Druckmaschine angeordnet sein und kann sich auch außerhalb der entsprechenden Druckerei befinden, beispielsweise bei einem Druckmaschinenhersteller, sofern die entsprechenden Daten über eine in Fig. 1 nicht dargestellte Datenleitung dorthin übertragen werden.

Die eine oder die mehreren Maschinen-Istdaten 1 werden zunächst dahingehend analysiert, ob diese aus einer Zeitspanne einer definierten Mindestdauer anhaltenden störungsfreien Produktion stammen, um zu vermeiden, dass die Maschinen-Istdaten 1 aus einer Produktion oder aus einem Zeitabschnitt einer Produktion stammen, welche sehr störungsbehaftet ist. Wenngleich eine derartige störungsbehaftete Druckproduktion nicht zwingend auf Probleme der Druckmaschine zurückzuführen ist, weil diese beispielsweise aus einem schadhaften oder minderwertigen Bedruckstoff herrühren, so sollte dennoch ausgeschlossen werden, dass Maschinen-Normwerte 11 ausschließlich aus störungsbeladenen Produktionsfenstern stammen , da zunächst nicht ausgeschlossen werden kann, dass derartige Störungen einer Produktion von einer unfachmännischen Einstellung oder Nutzung der Druckmaschine herrühren.

Stammen die erfassten oder die ermittelten Maschinen-Istdaten 1 aus einer sinnfälligen Produktion, so werden diese Maschinen-Istdaten 1 als Produktions-Istdaten 10 hinterlegt und/oder gespeichert. In Abhängigkeit von den Produktionsdaten 3 des jeweiligen Druckauftrages werden dann aus diesen Produktions-Istdaten 10 mindestens einer Zeitspanne mit einer definierten Mindestdauer einer störungsfreien Produktion in einen oder mehrere Maschinen-Normwerte 11 gebildet, was vorzugsweise über den Einsatz künstlicher Intelligenz erfolgt. Wie bereits oben angeführt, bilden die so ermittelten Maschinen-Normwerte 11 die Daten oder physikalischen Größen ab, unter entsprechenden Produktionsbedingungen, welche insbesondere durch die Produktionsdaten 3 abgebildet werden, welche physikalischen Größen beim Betrieb einer derartigen störungsfreien Produktion im Normalfall vorliegen.

Wie ferner aus Fig. 1 ersichtlich ist, wird eine oder auch mehrere Maschinen-Istdaten 1 auf Anomalien 7 hin analysiert und diejenigen Maschinen-Istdaten 1, welche nachfolgend beschriebene Abweichungen zu den zugehörigen Maschinen-Normwerten 11 aufweisen, werden als ein oder als mehrere Anomalie-Istdaten 12 hinterlegt und/oder gespeichert.

Als Anomalie-Istdaten 12 können beispielsweise die Maschinen-Istdaten 1 hinterlegt und/oder gespeichert werden, bei welchen eine Anomalie 7 gegenüber den vorhergehenden und/oder den nachfolgenden Maschinen-Istdaten 1 aufgewiesen wird.

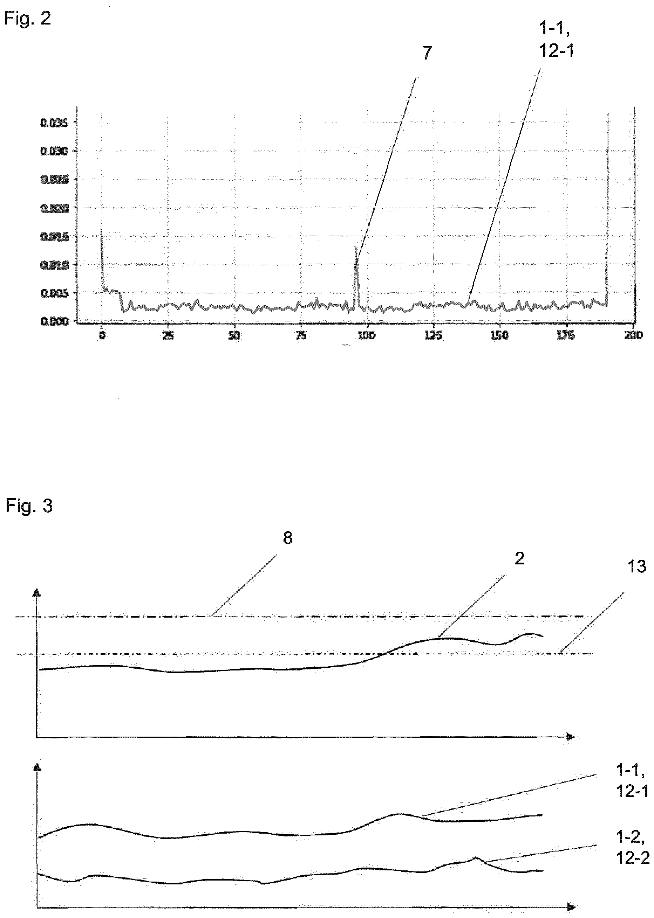

Fig. 2 zeigt rein beispielhaft einen ersten Maschinen-Istdatensatz 1-1 wie beispielsweise die Voreilung eines Antriebsmotores über eine definierte Zeiteinheit. Während diese erfasste oder ermittelte Größe normalerweise einen Wert zwischen 0,02 und 0,03 einnimmt und in diesem Bereich in einem vollkommen normalen Wertebereich liegt, erfolgt in etwa bei der Zeiteinheit 95 eine entsprechende Anomalie 7, da dort der Maschinen-Istdatensatz 1-1 einen Wert von ca. 0,013 annimmt und somit in etwa um den Faktor 6 höher ist als normal.

Durch diese Anomalie 7 wird somit dieses erste Maschinen-Istdatum 1-1 als ein erstes Anomaliedatum 12-1 aufgrund der Unregelmäßigkeit erfasst und/oder hinterlegt und/oder abgespeichert.

Als Anomalie-Istdaten 12 können jedoch auch diejenigen Maschinen-Istdaten 1 definiert und/oder hinterlegt und/oder gespeichert werden, bei welchen mindestens ein vorgegebener Maschinen-Sollwert 9 überschritten wird.

Beträgt beispielsweise die maximale Stromaufnahme und somit der Maschinen-Sollwert 9 für einen Antrieb zwanzig Ampere und wird dieser zumindest zeitweise überschritten, da die Stromaufnahme auf bis zu dreiundzwanzig Ampere ansteigt, so wird dieses Maschinen-Istdatum 1 aufgrund der Überschreitung des Maschinen-Sollwertes 9 als ein Anomalie-Istdatum 12 definiert und/oder hinterlegt und/oder gespeichert.

Als Anomalie-Istdaten 12 können auch diejenigen Maschinen-Istdaten 1 definiert und/oder hinterlegt und/oder gespeichert werden, bei denen während der Produktion ein vorgegebener Drucktechnik-Grenzwert 13 überschritten wird.

Fig. 3 zeigt ein derartiges Beispiel, bei welchem schematisch der zeitliche Verlauf von zwei für den Drucktechnik-Istwert 2 der Farbregisterabweichung relevante Maschinen-Istdaten 1-1, 1-2 wie beispielsweise der Phasenversatz des Antriebsmotors einer ersten Druckeinheit und der Phasenversatz des Antriebsmotors der zweiten

Druckeinheit zum Leitwert der virtuellen Leitachse dargestellt ist. Grundsätzlich bewegen sich die beiden Maschinen-Istdaten 1-1 und 1-2 im Normalbereich, dennoch ist ab ungefähr der Hälfte der erfassten oder dargestellten Zeit ein gewisser Anstieg zu erkennen, was sich mit nur geringem zeitlichen Versatz in einer Erhöhung des erfassten Drucktechnik-Istwertes 2 wie beispielsweise der Farbregisterabweichung zwischen dem ersten Druckwerk und dem zweiten Druckwerk bemerkbar macht.

Zwar ist bei dem in Fig. 3 dargestellten Beispiel der Drucktechnik-Istwert 2 immer noch deutlich unterhalb des zulässigen Drucktechnik-Sollwertes 8, der in diesem Beispiel die maximal zulässige Farbregisterabweichung definiert, allerdings überschreitet der Drucktechnik-Istwert 2 bereits einen unterhalb des Drucktechnik-Sollwertes 8 festgelegten Drucktechnik-Grenzwert 13, weshalb das computerimplementierte Verfahren hierbei eine Anomalie 7 feststellt, da das Überschreiten des Drucktechnik-Grenzwertes 13 als eine Art Frühwarnsystem vor dem Erreichen des Drucktechnik-Sollwertes 8 und der daraus resultierenden Produktion von Makulatur-Exemplaren wirkt.

Wie in Fig. 1 dargestellt, ist es auch möglich, dass die Recheneinrichtung 20 zusätzlich zu den vorgenannten Daten auch ein oder mehrere Maschinen-Störsignale 4 erfasst. So können durch die Recheneinrichtung 20 auch Maschinen-Störsignale 4 wie beispielsweise Meldungen von Bahnrissdetektoren oder von Stoppersensoren erfasst werden, da ein von derartigen Sensoren erfasstes Maschinen-Störsignale 4 häufig ein Beleg beziehungsweise die Folge für eine vorher aufgetretene Anomalie 7 ist.

Hiermit ist es möglich, dass die eine oder gegebenenfalls mehrere Maschinen-Istdaten 1 als eine oder gegebenenfalls als mehrere Anomalie-Istdaten 12 hinterlegt oder gespeichert werden, bei welchen im zeitlichen Vorlauf und/oder im zeitlichen Nachgang mindestens ein Maschinen-Störsignal 4 erzeugt wird.

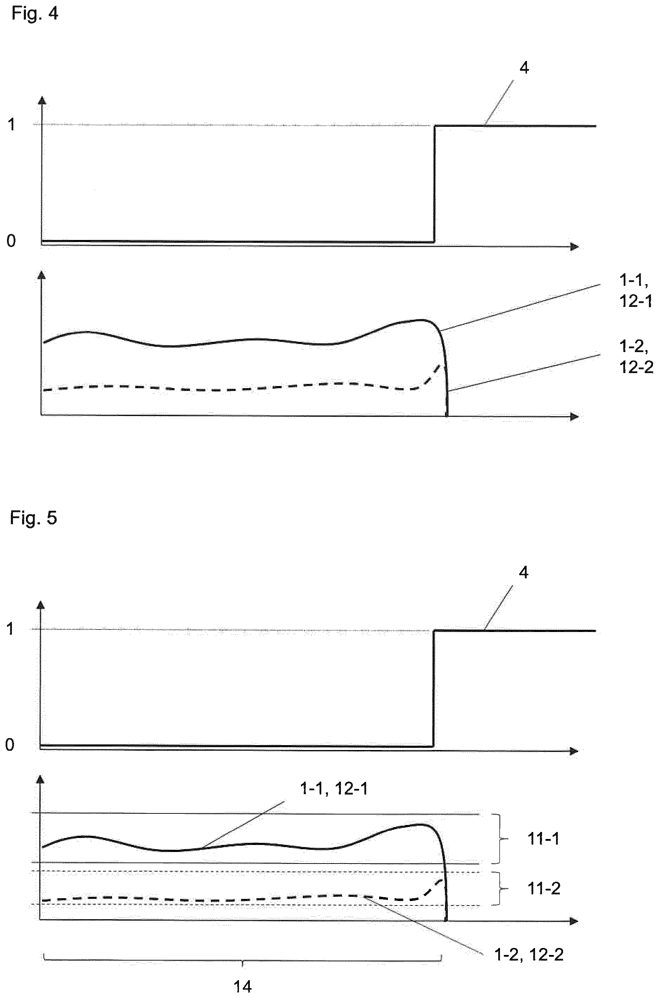

Fig. 4 zeigt ein derartiges schematisches Beispiel, bei welchem in dem unteren Diagramm der Verlauf zweier Maschinen-Istdaten 1 gezeigt wird, beispielsweise der Drehmomentenverlauf 1-1 eines Antriebsmotors und die daraus resultierende Bahnspannung 1-2 als gestrichelte Linie. Nach einem ursprünglich normalen Verlauf des Drehmomentes 1-1 steigt dieser entsprechend an, worauf sich als Folge dessen die Bahnspannung 1-2 entsprechend erhöht. Aufgrund des Anstieges der Bahnspannung 1-2 reißt die Substratbahn, weshalb ein Maschinen-Störsignal 4 ausgelöst wird, nämlich beispielsweise, dass ein Bahnbruchsensor einen Bahnbruch meldet, so dass der Wert dieses Maschinen-Störsignals 4 von einem Wert Null auf den Wert Eins ansteigt. Aufgrund des Bahnrisses fallen das Antriebsmoment 1-1 und die Bahnspannung 1-2 als Maschinen-Istdaten 1 auf den Wert Null.

Aufgrund der Erfassung von Maschinen-Störsignalen 4 ist es somit möglich, die relevanten Maschinen-Istdaten 1 als entsprechende Anomalie-Istdaten 12 zu definieren und/oder zu hinterlegen und/oder abzuspeichern.

Fig. 5 zeigt das leicht abgewandelte Beispiel aus Fig. 4, bei dem das erste Maschinen-Istdatum 1-1 innerhalb dem ersten Maschinen-Normwert 11-1 liegt und bei welchem das zweite Maschinen-Istdatum 1-2 innerhalb dem zweiten Maschinen-Normwert 11-2 liegt und von daher grundsätzlich keine sonderliche Auffälligkeit zeigen. Aufgrund des im Nachgang aufgetretenen Maschinen-Störsignals 4 wird jedoch ein Fehlerzeitraum 14 ermittelt, in welchem die relevanten Maschinen-Istdaten 1 erfasst werden, auch wenn diese innerhalb der jeweiligen Maschinen-Normwerte 11 liegen und somit vermeintlich keine Auffälligkeiten zeigen.

Durch dieses Definieren des Fehlerzeitraumes 14 mit den darin hinterlegten relevanten Maschinen-Istdaten 1, welche aufgrund des Auftretens eines Maschinen-Störsignals 4 als Anomalie-Istdaten 12 definiert und/oder hinterlegt und/oder gespeichert werden, kann somit dieser Fehlerzeitraum 14, welcher normalerweise die Dauer von wenigen Sekunden bis hin zu wenigen Minuten aufweist, das Auftreten von mindestens einem Bediensignal 6 und/oder mindestens einer Anomalie 7 und/oder mindestens einem Steuerungssignal 5 analysiert werden.

Hiermit ist es durch das computerimplementierte Verfahren möglich, dass mindestens ein Datensatz aus einem oder mehreren Maschinen-Istdaten 1 und/oder mindestens einem Bediensignal 6 und/oder mindestens einem Steuerungssignal 5 als potentielle Ursache für ein oder mehrere Anomalie-Istdaten 12 und/oder für mindestens einen Fehlerzeitraum 14 und/oder für mindestens ein Maschinen-Störsignal 4 ermittelt und/oder ausgegeben und/oder visualisiert wird.

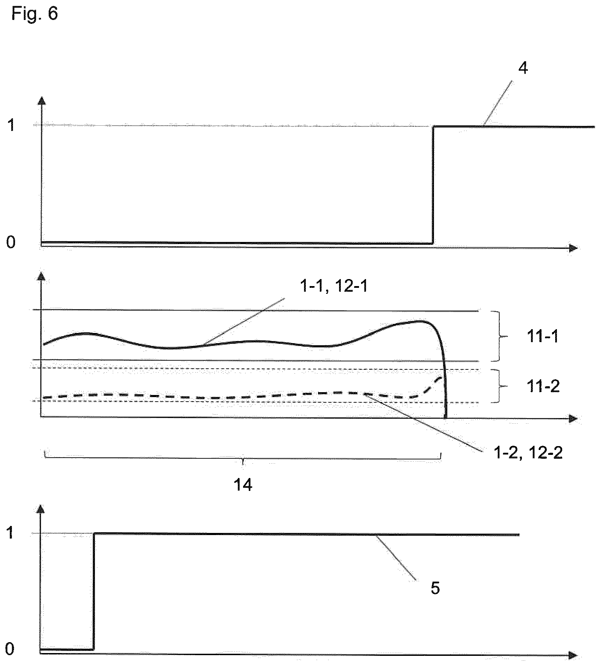

Fig. 6 zeigt das Beispiels aus Fig. 5, bei welchem innerhalb des Fehlerzeitraumes 14 noch ein zusätzliches Steuerungssignal 5 wie beispielsweise das Aktivieren einer Gummituch-Waschanlage oder ein Eindruckwechsel ausfindig gemacht werden konnte. Hierbei ist zu erkennen, dass in einem doch recht großen zeitlichen Nachlauf auf das Steuerungssignal 5 das erste Maschinen-Istdatum 1-1 eine größer werdende Anomalie 7 aufweist, welche eine Anomalie 7 des zweiten Maschinen-Istdatums 1-2 zur Folge hatte und folglich zu einem Maschinen-Störsignal 4 wie beispielsweise dem Signal eines Bahnbruchsensors führte.

In einer besonderen Ausgestaltung kann hierbei insbesondere mittels künstlicher Intelligenz eine Plausibilitätsprüfung des mindestens einen Datensatzes durchgeführt werden, um zu vermeiden, dass Maschinen-Istdaten 1 und/oder Bediensignale 6 und/oder Steuerungssignale 5 betrachtet werden, welche mit dem entstandenen Maschinen-Störsignal 4 nicht in Zusammenhang stehen können.

Hierbei ist es optional möglich, dass die Plausibilitätsprüfung zur Optimierung der eingesetzten künstlichen Intelligenz verwendet wird. Hierzu kann die hinterlegte Datenbank mit einer zunehmenden Anzahl an durchgeführten Plausibilitätsprüfungen entsprechend optimiert werden, beispielsweise auch durch eine Eingabe eines Bedieners, so dass durch die Optimierung der eingesetzten künstlichen Intelligenz die Zuverlässigkeit der Plausibilitätsprüfung gesteigert werden kann.

Zudem ist es möglich, dass der mindestens eine Maschinen-Normwert 11 mit Bezug auf die Produktionsdaten 3 für unterschiedliche Produktionsphasen und Produktionszustände eingeteilt werden und in einer Speichervorrichtung gespeichert und/ oder von dieser ausgegeben werden.

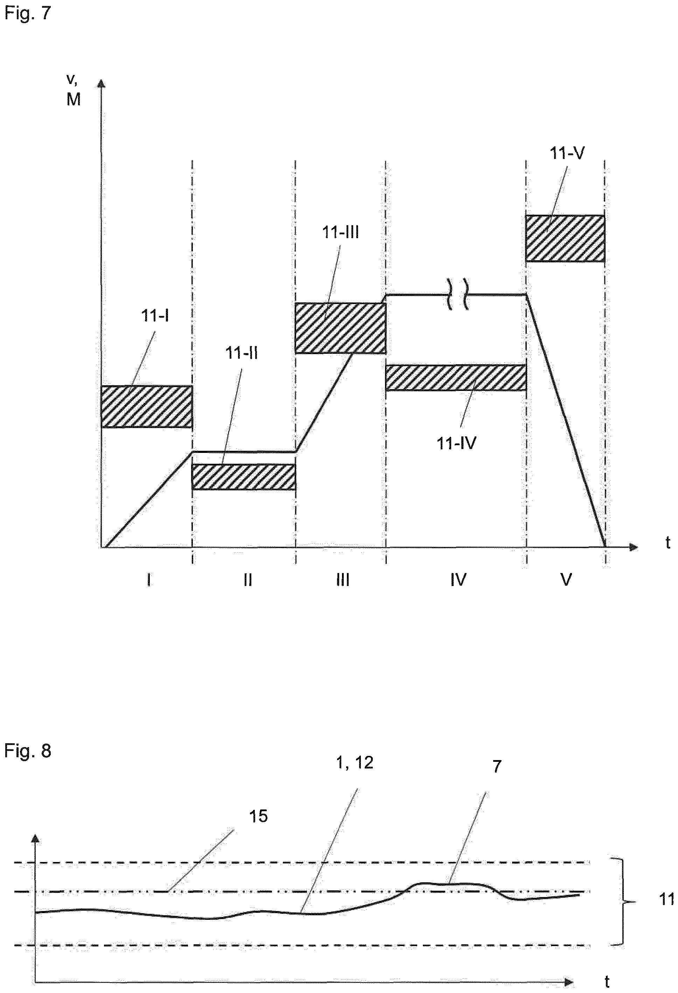

Fig. 7 zeigt ein derartiges rein schematisches Beispiel für unterschiedliche Maschinen-Normwerte 11 am Beispiel des Antriebsmomentes M eines Antriebsmotors als Maschinen-Normwert 11 für unterschiedliche Betriebszustände.

Auf der Abszisse ist die Zeit t aufgetragen, auf der Ordinate ist sowohl die Maschinengeschwindigkeit v als auch das Drehmoment M für die Maschinen-Normwerte 11 aufgetragen. Die Linie zeigt einen beispielhaften Verlauf für die Druckgeschwindigkeit v für eine gewöhnliche Produktion, welche in unterschiedliche Produktionsphasen I bis V eingeteilt ist, welche mit römischen Zahlen angegeben sind.

Die Produktionsphase I ist die sogenannte Anfahrphase, bei welcher die Druckmaschine auf eine Einrichtgeschwindigkeit beschleunigt wird. Aufgrund der Beschleunigung der entsprechenden Komponenten und Druckzylinder ist ein nicht zu geringes Drehmoment des Antriebes als entsprechender Maschinen-Normwert 11-I in der Anfahrphase I erforderlich und somit auch als Maschinen-Normwert 11-I zulässig.

Die Produktionsphase II ist die sogenannte Einrichtphase, bei welcher die entsprechenden Komponenten wie beispielsweise die Druckwerke bei nicht zu hoher Geschwindigkeit so eingerichtet und/oder eingeregelt werden, dass die erforderliche Druckqualität und/oder die entsprechende Falzqualität erreicht wird. Aufgrund der konstanten und nicht sonderlich hohen Maschinengeschwindigkeit v ist das Drehmoment M in dieser Produktionsphase II nicht sonderlich hoch, weshalb der entsprechende Maschinen-Normwert 11-II unterhalb dem Maschinen-Normwert 11-I liegt.

Die Produktionsphase III ist die Beschleunigungsphase, in welcher die Druckmaschine auf die entsprechende Produktionsgeschwindigkeit beschleunigt wird und gleichzeitig die Bahnspannung aufrechterhalten werden muss, so dass in dieser Produktionsphase III üblicherweise ein sehr hohes Antriebsmoment M erforderlich ist, weshalb in der Produktionsphase III das zulässige Antriebsmoment als Maschinen-Normwert 11-III entsprechend groß ist und auch eine größere Bandbreite möglich und somit zulässig ist.

Die Produktionsphase IV ist die Fortdruckphase, bei welcher die Druckmaschine mit möglichst konstanter Fortdruckgeschwindigkeit betrieben wird. Aufgrund der nicht mehr erforderlichen Beschleunigung der entsprechenden Komponenten ist in dieser Produktionsphase IV das Drehmoment des entsprechenden Antriebes entsprechend geringer, zudem soll hierbei das Drehmoment sehr konstant gehalten werden, weshalb der Maschinen-Normwert 11-IV geringer ist als der Normwert III und zudem eine kleinere zulässige Bandbreite aufweist.

Die Produktionsphase V ist die Auslaufphase, bei welcher die Druckmaschine nach oder zum Erreichen der Soll-Auflagenhöhe abgebremst wird. Aufgrund des Abbremsvorganges ist das hierfür erforderliche Drehmoment vom Betrag her höher, weshalb der Maschinen-Normwert 11-V in der Produktionsphase V größer als in den vorherigen Produktionsphasen I bis IV ist.

Durch Hinterlegen unterschiedlicher Maschinen-Normwerte 11 für unterschiedliche Produktionsphasen I bis V kann somit während der unterschiedlichen Produktionsphasen mit der Bewertung der Maschinen-Istdaten 1 als Anomalie-Istdaten 12 entsprechend differenziert vorgegangen werden, um die Effizienz der Fehlerauswertung zu erhöhen.

Gemäß einer weiteren Ausgestaltung werden die Maschinen-Normwerte 11 mit Bezug auf die Produktionsdaten 3 als ein oder mehrere Voreinstellwerte für Druckaufträge mit gleichen oder vergleichbaren Produktionsdaten 3 verwendet.

Da die Maschinen-Normwerte 11 die zulässigen und/oder erforderlichen Bereiche oder Werte für die Maschinen-Istdaten 1 abbilden, können diese ermittelten Maschinen-Normwerte 11 zum Voreinstellen einer Druckmaschine verwendet werden, um entsprechende Bedienungsfehler zu vermeiden. Da jedoch die Maschinen-Normwerte 11 von den Produktionsdaten 3 abhängig sein können, ist auch hinsichtlich der Produktionsdaten 3 eine Differenzierung der Maschinen-Normwerte 11 möglich.

So steigt beispielsweise die erforderliche aber auch die zulässige Bahnspannung sowohl mit der Bahnbreite des Bedruckstoffes als auch in der Regel mit der Grammatur des Bedruckstoffes. Allerdings können für unterschiedliche Arten von Bedruckstoffen wie beispielsweise ungestrichenes Papier, gestrichenes Papier oder gar für eine zu bedruckende Kunststofffolie wieder ganz andere Bereiche der Bahnspannung erforderlich und/oder zulässig sein, weshalb auch eine Zuordnung der Maschinen-Normwerte 11 zu den Produktionsdaten 3 sinnfällig oder erforderlich ist.

Folglich können jedoch auch Maschinen-Normwerte 11, welche für eine erste Produktion mit ersten Produktionsdaten 3-1 ermittelt wurden, auch für die Voreinstellung für eine Produktion mit zweiten Produktionsdaten 3-2 verwendet werden, sofern sich die zweiten Produktionsdaten 3-2 in einem vertretbaren Rahmen, das heißt, dass die zweiten Produktionsdaten 3-2 mit den ersten Produktionsdaten 3-1 vergleichbar sind, von den ersten Produktionsdaten 3-1 unterscheiden.

Gemäß einer weiteren Ausgestaltung der Erfindung wird im Falle des Auftretens von einer oder mehreren Anomalie-Istdaten 12 durch die Recheneinrichtung 20 eine Warnmeldung erzeugt und/oder ein Eingriff in die Steuerung der Druckmaschine erfolgt, wenn eine oder mehrere Anomalie-Istdaten 12 mindestens einen Anomalie-Grenzwert 15 überschreiten.

Durch diese Ausgestaltung kann das computerimplementierte Verfahren nicht nur zur Datensicherung und Datenanalyse nach aufgetretenen Störungen oder drucktechnischen Problemen und zur zukünftigen Vermeidung dieser herangezogen werden. Vielmehr ist es durch diese Ausgestaltung auch möglich, bereits bei sich anbahnenden Problemen der Produktionsstabilität oder der Druckqualität eine Warnmeldung zu erzeugen und/oder in die Maschinensteuerung aktiv einzugreifen, beispielsweise durch Reduzierung der Druckgeschwindigkeit, um so Produktionsstörungen beispielsweise durch Bahnbrüche oder das Drucken von Makulatur zu vermeiden und/oder das Bedienpersonal auf mögliche Unregelmäßigkeiten im Produktionsprozess aufmerksam zu machen, noch bevor Störungen auftreten und um diese zu vermeiden.

Fig. 8 zeigt einen beispielhaften Verlauf eines Maschinen-Istdatums 1 über die Zeit t, wobei dieses Maschinen-Istdatum 1 eine Anomalie 7 aufweist, da die Werte gegenüber dem vorherigen Zeitraum ein anormales Verhalten aufweisen, weshalb dieses Maschinen-Istdatum 1 als ein Anomalie-Istdatum 12 erkannt, erfasst, hinterlegt und/oder abgespeichert wurde. Wenngleich dieses Anomalie-Istdatum 12 noch innerhalb des entsprechenden Maschinen-Normwertes 11 liegt und somit grundsätzlich Störungen zu erwarten sind, so überschreitet dieses Anomalie-Istdatum 12 jedoch einen definierten Anomalie-Grenzwert 15.

Um einen weiteren Anstieg des Maschinen-Istdatums 1 und somit des Anomalie-Istdatums 12 bis zum oberen Grenzwert des Maschinen-Normwertes 11 zu vermeiden, da dieses Überschreiten des Maschinen-Normwertes 11 erfahrungsgemäß mit entsprechenden Problemen verbunden sein kann, wird als frühzeitige Reaktion auf ein Überschreiten des Anomalie-Grenzwertes 15 entweder eine Warnmeldung vorzugsweise mit einer Handlungsanweisung generiert und/oder es wird aktiv in die Steuerung der Druckmaschine eingegriffen, um potentielle Probleme vorbeugend zu vermeiden. Ein Eingriff in die Steuerung der Druckmaschine kann beispielsweise eine Reduzierung der Druckgeschwindigkeit oder das zumindest temporäre Unterdrücken nicht zwingend erforderlicher Steuerungssignale 5 wie beispielsweise das Vermeiden von Waschvorgängen sein.

### Bezugszeichenliste

- 1: Maschinen-Istdaten
- 2: Drucktechnik-Istwerte
- 3: Produktionsdaten
- 4: Maschinen-Störsignal
- 5: Steuerungssignal
- 6: Bediensignal
- 7: Anomalie
- 8: Drucktechnik-Sollwert
- 9: Maschinen-Sollwert

- 10: Produktions-Istdaten
- 11: Maschinen-Normwerte
- 12: Anomalie-Istdaten
- 13: Drucktechnik-Grenzwert
- 14: Fehlerzeitraum
- 15: Anomalie-Grenzwert

- 20: Recheneinrichtung

## Patentansprüche

1. Computerimplementiertes Verfahren zur Erfassung und Analyse von Daten einer Druckmaschine während oder nach einer Produktion zur Auswertung und zur Produktivitätsoptimierung, wobei von der Druckmaschine während mindestens eines Druckauftrages eine definierte Anzahl von Druckprodukten mit mindestens einem vorgegebenen Drucktechnik-Sollwert (8) produziert werden, wobei von einer Recheneinrichtung (20) über mindestens einen Teil des mindestens einen Druckauftrages hinweg ein oder mehrere Maschinen-Istdaten (1) und/oder ein oder mehrere Drucktechnik-Istwerte (2) und/oder ein oder mehrere Produktionsdaten (3) und/oder ein oder mehrere Maschinen-Störsignale (4) und/oder mindestens ein Steuerungssignal (5) und/oder mindestens ein Bediensignal (6) erfasst und/oder über einen Zeitraum hinweg gespeichert werden, **dadurch gekennzeichnet, dass** die einen oder mehreren Maschinen-Istdaten (1) während der Produktion von Druckprodukten des mindestens einen Druckauftrages als ein oder mehrere Produktions-Istdaten (10) hinterlegt und/oder gespeichert werden und in Abhängigkeit der Produktionsdaten (3) und/oder für vergleichbare Produktionsdaten (3) durch Einsatz künstlicher Intelligenz aus den Produktions-Istdaten (10) für mindestens eine Zeitspanne einer definierten Mindestdauer einer zumindest störungsfreien Produktion ein oder mehrere Maschinen-Normwerte (11) gebildet werden.

2. Computerimplementiertes Verfahren nach Anspruch 1, **dadurch gekennzeichnet, dass** eine oder mehrere Maschinen-Istdaten (1) als ein oder mehrere Anomalie-Istdaten (12) hinterlegt und/oder gespeichert werden, zu welchen Abweichungen zu den einen oder mehreren Maschinen-Normwerten (11) gebildet werden.

3. Computerimplementiertes Verfahren nach einem der Ansprüche 1 oder 2, **dadurch gekennzeichnet, dass** diejenigen Maschinen-Istdaten (1) als Anomalie-Istdaten (12) hinterlegt und/oder gespeichert werden, zu welchen eine Anomalie (7) gegenüber den vorhergehenden und/oder nachfolgenden Maschinen-Istdaten (1) aufgewiesen wird.

4. Computerimplementiertes Verfahren nach einem der Ansprüche 1 bis 3, **dadurch gekennzeichnet, dass** diejenigen Maschinen-Istdaten (1) als Anomalie-Istdaten (12) hinterlegt und/oder gespeichert werden, bei welchen mindestens ein vorgegebener Maschinen-Sollwert (9) überschritten wird.

5. Computerimplementiertes Verfahren nach einem der Ansprüche 1 bis 4, **dadurch gekennzeichnet, dass** diejenigen Maschinen-Istdaten (1) als ein oder mehrere Anomalie-Istdaten (12) hinterlegt und/oder gespeichert werden, bei welchen mindestens ein vorgegebener Drucktechnik-Grenzwert (13) überschritten wird.

6. Computerimplementiertes Verfahren nach einem der Ansprüche 1 bis 5, **dadurch gekennzeichnet, dass** von der Recheneinrichtung (20) zusätzlich eines oder mehrere Maschinen-Störsignale (4) erfasst und/oder gespeichert werden.

7. Computerimplementiertes Verfahren nach Anspruch 6, **dadurch gekennzeichnet, dass** die einen oder mehreren Maschinen-Istdaten (1) als eine oder mehrere Anomalie-Istdaten (12) hinterlegt und/oder gespeichert werden, bei welchen im zeitlichen Vorlauf und/oder im zeitlichen Nachgang mindestens ein Maschinen-Störsignal (4) erzeugt wird.

8. Computerimplementiertes Verfahren nach Anspruch 7, **dadurch gekennzeichnet, dass** mindestens ein Fehlerzeitraum (14) ermittelt und/oder gespeichert wird, bei welchem ein oder mehrere Anomalie-Istdaten (12) im Bereich der zugehörigen ein oder mehreren Maschinen-Normwerte (11) liegen.

9. Computerimplementiertes Verfahren nach einem der Ansprüche 2 bis 8, **dadurch gekennzeichnet, dass** ein oder mehrere Anomalie-Istdaten (12) und/oder der mindestens eine Fehlerzeitraum (14) auf das Auftreten von mindestens einem Bediensignal (6) und/oder mindestens eine Anomalie (7) und/oder mindestens ein Steuerungssignal (5) analysiert werden.

10. Computerimplementiertes Verfahren nach Anspruch 9, **dadurch gekennzeichnet, dass** mindestens ein Datensatz aus einem oder mehreren Maschinen-Istdaten (1) und/oder mindestens einem Bediensignal (6) und/oder mindestens einem Steuerungssignal (5) als potentielle Ursache für ein oder mehrere Anomalie-Istdaten (12) und/oder für mindestens einen Fehlerzeitraum (14) und/oder für mindestens ein Maschinen-Störsignal (4) ermittelt und/oder ausgegeben und/oder visualisiert wird.

11. Computerimplementiertes Verfahren nach Anspruch 10, **dadurch gekennzeichnet, dass** eine Plausibilitätsprüfung des mindestens einen Datensatzes durchgeführt wird.

12. Computerimplementiertes Verfahren nach Anspruch 11, **dadurch gekennzeichnet, dass** die Plausibilitätsprüfung zur Optimierung der eingesetzten künstlichen Intelligenz verwendet wird.

13. Computerimplementiertes Verfahren nach einem der Ansprüche 1 bis 12, **dadurch gekennzeichnet, dass** der mindestens eine Maschinen-Normwert (11) mit Bezug auf die Produktionsdaten (3) für unterschiedliche Produktionsphasen und Produktionszustände eingeteilt wird und in einer Speichervorrichtung gespeichert und/oder von dieser ausgegeben werden.

14. Computerimplementiertes Verfahren nach Anspruch 13, **dadurch gekennzeichnet, dass** die Maschinen-Normwerte (11) mit Bezug auf die Produktionsdaten (3) als ein oder mehrere Voreinstellwerte für Druckaufträge mit gleichen oder vergleichbaren Produktionsdaten (3) verwendet werden.

15. Computerimplementiertes Verfahren nach einem der Ansprüche 2 bis 5, **dadurch gekennzeichnet, dass** im Falle des Auftretens von einem oder mehreren Anomalie-Istdaten (12) durch die Recheneinrichtung (20) eine Warnmeldung erzeugt wird und/oder ein Eingriff in die Steuerung der Druckmaschine erfolgt, wenn ein oder mehrere Anomalie-Istdaten (12) mindestens einen Anomalie-Grenzwert (15) überschreiten.
